# FASCICULE DE BREVET EUROPEEN

(11) **EP 3 750 748 B1**
(45) Date de publication et mention de la délivrance du brevet: **25.01.2023**
(21) Numéro de dépôt: 20179553.1
(22) Date de dépôt: 11.06.2020
(51) Int. Cl.: B60Q 1/26, H01Q 1/42, H01Q 1/44, G01S 13/931, H01Q 1/32

(54) **RADÔME RÉTROÉCLAIRÉ**
RADOM MIT HINTERGRUNDBELEUCHTUNG
BACKLIT RADOME

(30) Priorité: 13.06.2019 FR 1906318
(43) Date de publication de la demande: 16.12.2020
(73) Titulaire: Compagnie Plastic Omnium, 69007 Lyon (FR)
(72) Inventeur: DUBOST, Elise, 01150 Sainte-Julie (FR); STABLO, Frédéric, 01150 Sainte-Julie (FR); LANDOULSI, Alaeddine, 01150 Sainte-Julie (FR)
(74) Mandataire: LLR

(56) Documents cités:
- WO-A1-2018/121855
- DE-A1-102015 004 204
- DE-A1-102016 007 119

## Description

L'invention concerne le domaine des véhicules automobiles équipés de radar, et plus particulièrement, le domaine des dispositifs pour masquer et protéger un tel radar, encore appelés « radômes ».

Le dispositif selon l'invention s'applique notamment pour les radars disposés dans le pare-choc avant ou arrière des véhicules, par exemple du type ACC.

Pour des raisons de sécurité notamment, il est connu d'équiper des véhicules automobiles de radars, par exemple de type ACC, selon l'expression anglo-saxonne « Adaptative Cruise Control ». Un tel radar sert en particulier à réguler la vitesse des véhicules en fonction du trafic et/ou d'obstacles sur la route. Le radar détecte la vitesse et la distance de l'objet précédant le véhicule porteur, de façon à maintenir notamment une distance de sécurité entre les véhicules.

Les radars ACC sont montés en face avant ou arrière des véhicules, en général entre les barreaux de la grille, qui peut être une grille de refroidissement, mais aussi sur d'autres pièces de carrosserie comme des ailes, par exemple pour la détection des cyclistes.

Pour cacher ces radars pour des raisons esthétiques, et/ou pour les protéger des agressions extérieures (pluies, glace, givre, boues, insectes, feuilles...), il est connu d'utiliser un radôme, c'est à dire une pièce, ou dispositif de protection comportant un cache plastique positionné devant le radar.

Un tel cache plastique laisse passer les ondes radar avec une atténuation aussi faible que possible pour ne pas perturber le fonctionnement du radar lui-même. Le document DE 10 2016 007 119 A1 divulgue un radôme pour un radar de véhicule automobile comportant des éléments chauffants et lumineux.

On connaît déjà de la demande FR3070547 du déposant, un radôme décoré composé d'un support opaque à la lumière et transparent aux ondes radar et d'un corps transparent aux ondes radar et à la lumière, entre lesquels est disposé un guide de lumière diffusant. Ce radôme, qui permet de rétroéclairer un emblème transparent aux ondes radar présent entre le guide de lumière et le corps transparent, présente l'inconvénient de nécessiter la présence d'un guide de lumière dans le cône d'émission du radar, également appelé champs de détection du radar. Il est donc possible que ce guide de lumière perturbe le fonctionnement du radar.

Pour remédier à cet inconvénient, il a été proposé dans la demande française n° 19 04493 du déposant, un radôme équipé d'un réflecteur de lumière, agencé de telle façon qu'un faisceau lumineux émis par une source lumineuse du radôme soit réfléchi vers un corps du radôme, transparent à la lumière et aux ondes radar.

Cependant, les radars peuvent voir leur fonctionnement normal déréglé par la présence d'une couche de glace, de neige ou de givre en cas de température en dessous de 10 degrés Celsius car le mouvement du véhicule a un effet négatif sur la température. On peut donc observer des dépôts de givre même à des températures positives. Une couche de givre vient perturber le passage normal des ondes électromagnétiques et est une source d'erreur dans la mesure des paramètres physiques extérieurs.

Afin d'éviter le dépôt de givre, qui vient non seulement rendre le système d'assistance inutilisable, mais qui de surcroit peut générer de fausses alarmes, on prévoit un système de dégivrage sur le radôme.

Un tel système de dégivrage est traditionnellement formé d'une piste chauffante constituée de fils conducteurs capables de transformer une énergie électrique en énergie thermique par effet Joule, associée à deux plaques de connexion à chaque extrémité de la piste chauffante afin de l'alimenter en un courant électrique, le tout étant positionné sur un élément pour pièce de carrosserie et à proximité d'un capteur. L'énergie thermique ainsi dégagée permet de dégivrer localement la pièce dans le cas où une couche de givre s'est formée. La piste chauffante, pour éviter de perturber le passage des ondes électromagnétiques, doit être positionnée selon une géométrie particulière désignée dans ce qui suit par un positionnement « en serpentin ». Pour la clarté de l'exposé, on définit une piste chauffante positionnée en « serpentin » de la façon suivante : une piste chauffante en serpentin suit un trajet en boustrophédon, à savoir un trajet qui décrit des segments parallèles avec des virages à 180° entre deux segments qui tournent alternativement dans un sens, puis dans le sens opposé à ce sens avec une distance constante entre deux segments parallèles.

Par extension, une piste positionnée en serpentin désigne une piste configurée pour permettre le passage d'ondes électromagnétiques d'une plage de fréquences d'un radar.

En effet, l'exactitude du positionnement de la piste chauffante est très importante pour éviter qu'elle ne fasse obstacle au passage des ondes électromagnétiques, notamment le parallélisme entre les différents segments des pistes chauffantes et l'espacement entre ces pistes chauffantes doit être respecté très précisément. A chaque fréquence d'onde électromagnétique va correspondre une configuration du positionnement de la piste chauffante optimale pour que cette piste chauffante soit transparente vis-à-vis du passage de cette onde électromagnétique.

L'invention a notamment pour but de fournir un radôme décoré par rétroéclairage, permettant cependant un fonctionnement optimisé du radar, même dans des conditions de température où une couche de glace, de neige ou de givre aurait pu se former sur le radôme, notamment à des températures inférieures à 10 degrés Celsius.

A cet effet l'invention a pour objet un dispositif de protection d'un radar de véhicule automobile, comprenant les éléments :
- un corps formé d'une matière transparente aux ondes radar et à la lumière,
- une source de lumière,
- un réflecteur de lumière formé d'une matière transparente aux ondes radar, et
- une piste chauffante électriquement conductrice positionnée à la surface ou à l'intérieur du corps en matière transparente, caractérisé en ce qu'une cavité d'air est ménagée entre le réflecteur de lumière et le corps transparent. les éléments étant disposés de manière qu'un faisceau lumineux émis par la source de lumière soit réfléchi par le réflecteur de lumière vers le corps en matière transparente.

L'absorbance d'un milieu mesure la capacité de ce milieu à absorber l'onde électromagnétique qui le traverse. La transmission (ou transmittance) d'un milieu est définie comme l'inverse de l'absorbance. Il s'agit donc de la fraction du flux traversant le milieu. On parle de transparence pour la lumière visible. Ainsi, une matière est transparente à la lumière lorsqu'une fraction de la lumière visible la traverse.

Au sens de l'invention, on entend par « transparent aux ondes radar » une matière qui se laisse traverser par les ondes radar. L'épaisseur de matière transparente au radar va être fonction des caractéristiques diélectriques (permittivité et Tan Delta) de celle-ci et de la fréquence de fonctionnement du radar.

De manière non exhaustive, la matière transparente à la lumière et aux ondes radar peut être choisie parmi un thermoplastique ou un thermodur par exemple un polycarbonate, un polyamide, un polypropylène, un polyméthacrylate de méthyle, un copolyester, de l'acrylonitrile butadiène styrène, de l'acrilonitrile styrène acrylate, du styrène acrilonitrile, un mélange d'acrilonitrile styrène acrylate et de polycarbonate, un mélange de polycarbonate et polytéréphtalate d'éthylène, une résine epoxy, un polyurethane.

Ainsi, cette solution permet de fournir un radôme décoré rétroéclairé présentant des avantages en termes de décoration, car il prévient la formation d'ombres dans l'image de l'emblème. Par ailleurs le fonctionnement du radar est conservé, car les sources de lumière ne sont pas positionnées dans le cône d'émission du radar grâce au système de rétroéclairage de ce radôme. Enfin, ce radôme est compatible avec le fonctionnement du radar à des températures inférieures à 10 degrés Celsius, et donc même dans des conditions de température où une couche de glace, de neige ou de givre aurait pu se former sur le radôme.

De ce fait, le radôme selon l'invention permet également d'équiper des véhicules classés niveau 4 et 5 dans la Classification de l'Organisation internationale des constructeurs automobiles (OICA). Il s'agit respectivement de véhicules capables de se déplacer sans leur conducteur dans certaines conditions pour le niveau 4, et dans toutes conditions pour le niveau 5. En effet dans ces véhicules, la fonction dégivrage du radôme est nécessaire.

Suivant d'autres caractéristiques optionnelles du dispositif de protection de radar, prises seules ou en combinaison :
- La piste chauffante comprend une partie de connexion et une partie chauffante configurée pour permettre le passage d'ondes électromagnétiques d'une plage de fréquences d'un radar.
- La partie chauffante est une partie en serpentin.

La cavité d'air permet une isolation thermique de l'élément chauffant. De ce fait, pour un même temps de chauffage, la température est maintenue plus longtemps élevée.

L'efficacité du dégivrage est ainsi prolongée. Par ailleurs, la présence de la cavité d'air est avantageuse en ce qu'elle permet une meilleure transmission des ondes radar. De préférence, l'épaisseur de la cavité est comprise entre ½ longueur d'onde radar, et 12 fois la longueur d'onde radar, soit entre environ 2 mm et 48 mm. Les inventeurs ont montré que la transmission des ondes radar était plus élevée pour des épaisseurs de la cavité d'air comprises dans l'intervalle ci-dessus.
- Le dispositif comporte en outre un revêtement de décor, ou une texture de surface transparent(e) aux ondes radar.
- Le revêtement de décor est peint ou gravé au laser sur une face du corps en matière transparente, intérieure au dispositif de protection.
- Le corps en matière transparente comporte au moins deux couches. Ainsi, la différence d'épaisseur du corps, résultant de la présence du décor, peut être compensée par une différence d'épaisseur inverse sur une autre couche du corps, les deux différences d'épaisseur étant placées en regard l'une de l'autre. Ceci permet de maintenir constante l'épaisseur du corps, et de conserver ainsi une bonne transparence aux ondes radar. Dans une telle disposition, le décor peut être localisé à l'interface entre deux couches, ou bien sur une face du corps intérieure au dispositif de protection. La piste chauffante électriquement conductrice peut être positionnée à l'interface entre deux couches du corps en matière transparente, ou bien sur une face du corps intérieure au dispositif de protection, ou bien encore sur une face du corps extérieure au dispositif de protection.
- Le réflecteur de lumière est un insert amovible. Ainsi, celui-ci peut être rapporté en fonction du besoin d'éclairage du radôme. De plus, l'utilisation d'un insert permet de

gérer la diversité des logos. L'insert pourra ainsi être dimensionné en fonction de la dimension du logo, de la zone à éclairer, et/ou de la dimension du cône du radar.
- Le réflecteur de lumière est revêtu sur une face intérieure au dispositif de protection, de métaux tels que l'indium, l'or ou l'étain ou tout autre métal permettant un rendu « aspect chrome » et dont la faible épaisseur permet d'être transparent aux ondes du radar, de préférence déposés par la technique du dépôt en phase vapeur (« Physical Vapour Déposition », PVD). L'utilisation de cette technique et de ces matériaux permet de donner au radôme un aspect métallisé, alors même que les éléments métalliques de façon générale perturbent la transmission des ondes radar.
- La source de lumière est située en dehors d'un cône d'émission du radar. Ainsi, la source de lumière ne perturbera pas le fonctionnement du radar.
- La piste chauffante comprend une partie de connexion qui est située en dehors du cône d'émission du radar. Ainsi, la partie de connexion ne perturbera pas le fonctionnement du radar.
- Le corps en matière transparente comprend une zone opaque à la lumière. La source de lumière et la partie de connexion peuvent être ainsi dissimulées derrière la zone opaque du corps en matière transparente. Alternativement si le corps en matière transparente est une grille du véhicule, la partie de connexion peut être avantageusement cachée dans une zone technique de celle-ci.
- La partie chauffante comprend une partie en serpentin qui s'étend sur une surface d'intersection entre le corps en matière transparente et le cône d'émission du radar. Il en résultera un dégivrage homogène et complet de la partie du radôme qui se situe dans le cône d'émission.
- La partie en serpentin de la piste chauffante est un bon conducteur thermique. La nature métallique, le diamètre du fil et la longueur du circuit vont être sélectionnés en fonction de la surface de la zone à dégivrer, de l'épaisseur de plastique à chauffer. Les fils utilisés peuvent être à base de Cuivre, Argent, Tungstène ou tout alliage en comprenant. La résistance linéique du fil peut être 0.15 à 15 Ω.m⁻¹ par exemple pour des alliages CuAg ou Cu seul. La conductivité thermique du Cuivre pur : 350 - 380 W.m⁻¹.K⁻¹. Pour un fil d'argent pur la conductivité thermique est de 406 à 430 W.m⁻¹.K⁻¹. Chacune de ces propriétés est propre à l'alliage sélectionné.
- La partie chauffante de la piste chauffante est transparente aux ondes radar. La partie chauffante en elle-même n'est pas transparente aux ondes radar. C'est la largeur de la partie chauffante, sa fréquence de passage et la rectilignité qui la rendent « invisible » au passage de l'onde du radar.
- La piste chauffante est visible mais la faible épaisseur ne modifie pas le rendu lumineux.
- La partie en serpentin de la piste chauffante comprend un fil métallique de diamètre inférieur à 300 µm, préférentiellement inférieur à 100 µm.
- Le fil métallique est déposé par ultrason sur un film chimiquement compatible avec le matériau du corps en matière transparente.
- Le fil métallique est appliqué par dépose 3D sur le corps en matière transparente.
- La partie chauffante de la piste chauffante peut être composée d'encre conductrice déposée en lignes de faible largeur, rectiligne et de fréquence liée à la fréquence de fonctionnement du radar. Ce système chauffant à base d'encre n'a donc pas un design en serpentin comme un fil métallique car chaque piste est reliée à un busbar de part et d'autre.
- La partie chauffante de la piste chauffante comprend une nanomèche métallique, de préférence en cuivre, argent ou tout autre métal permettant une bonne conduction thermique et une transparence aux ondes. La nanomèche est reliée à un busbar de part et d'autre et ne présente donc pas un design en serpentin, comme l'encre conductrice.
- La partie chauffante de la piste chauffante comprend un nanotube de carbone. Le nanotube est relié à un busbar de part et d'autre et ne présente donc pas un design en serpentin, comme l'encre conductrice.
- Le réflecteur est assemblé sur le corps en matière transparente, entre celui-ci et le radar, par tout moyen approprié, par exemple par collage, soudure laser ou bouterollage. Cet assemblage est de préférence étanche à la lumière et à l'humidité.
- La source de lumière est fixée sur le réflecteur.
- La source de lumière est une source de lumière conventionnelle que l'homme du métier choisira parmi les sources de lumières adaptées à l'éclairage de pièces extérieures de véhicule automobile.
- La source de lumière comprend une diode électroluminescente.
- La source de lumière est située au foyer d'une parabole constituée par une paroi du réflecteur sur laquelle le faisceau lumineux est réfléchi. Ainsi, on obtient un effet miroir homogène.

L'invention a également pour objet un ensemble d'un radar et d'un dispositif de protection du radar présentant les caractéristiques de dispositif définies ci-avant.

### Brève description des figures

L'invention sera mieux comprise à la lecture de la description qui va suivre donnée uniquement à titre d'exemple et faite en se référant aux dessins annexés dans lesquels :
[Fig. 1] la figure 1 est une représentation schématique du positionnement d'un dispositif de protection d'un radar de l'état de la technique par rapport au radar.
[Fig. 2] la figure 2 est une vue de dessus d'un dispositif de protection d'un radar selon un mode de réalisation de l'invention.
[Fig. 3] la figure 3 est une vue schématique en perspective représentant la piste chauffante sur le dispositif de protection d'un radar selon un mode de réalisation de l'invention.

### Description détaillée

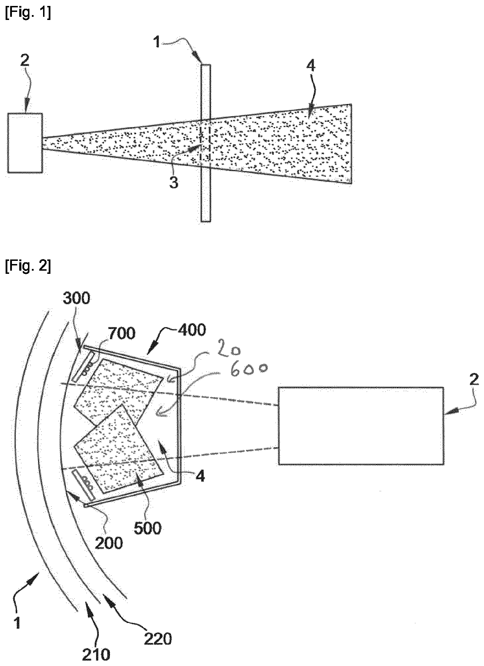

Comme l'illustre la figure 1, le dispositif de protection 1, ou radôme, selon l'état de la technique, est destiné à être placé devant le radar 2. Le radôme 1 comporte au moins une zone de transmission 3 apte à être traversée par les ondes 4 du radar 2. La zone de transmission 3 est formée d'une matière transparente aux ondes radar. Le radôme 1 est apte à être fixé sur un parechoc de véhicule automobile, devant le radar.

La figure 2 montre le radôme 1 selon un mode de réalisation de l'invention. Le dispositif 1 de protection du radar 2 du véhicule automobile, comprend un corps 200 formé d'une matière transparente aux ondes radar 4 et à la lumière, deux sources de lumière 300, et un réflecteur de lumière 400 formé d'une matière transparente aux ondes radar 4. Ces éléments sont disposés de manière qu'un faisceau lumineux 500 émis par une source de lumière 300 soit réfléchi par le réflecteur de lumière 400 vers le corps 200 en matière transparente. Le corps 200 en matière transparente comporte deux couches 210, 220. Le dispositif 1 comprend également une piste chauffante 12 électriquement conductrice positionnée à la surface du corps 200 en matière transparente. Plus précisément, la piste chauffante est positionnée sur une face du corps extérieure au dispositif de protection, qui est la face de la couche extérieure 210 du corps 200. La piste chauffante pourrait également être positionnée à l'intérieur du corps 200 en matière transparente, c'est-à-dire à l'interface entre les couches 210 et 220 du corps 200, ou bien sur une face du corps intérieure au dispositif de protection, c'est-à-dire la face de la couche intérieure 220 du corps 200.

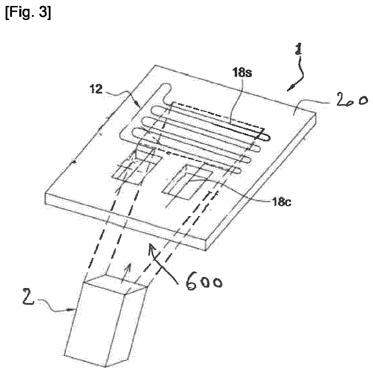

En se référant à la figure 3, on voit la piste chauffante 12 positionnée et fixée sur une face du corps 200. Cette piste chauffante 12 comporte une partie de connexion 18c et une partie chauffante, ici en serpentin, de dégivrage 18s. La partie en serpentin 18s de dégivrage de la piste chauffante 12 est positionnée selon une disposition compatible avec le passage d'ondes électromagnétiques à travers le corps 200. Dans l'exemple décrit, la partie en serpentin 18s de dégivrage de la piste chauffante 12 suit un trajet en boustrophédon. La partie en serpentin de la piste chauffante est un bon conducteur thermique et est transparente aux ondes radar et à la lumière. Dans cet exemple, elle comprend un fil métallique de diamètre inférieur à 100 µm. Le fil métallique a été déposé par ultrason sur un film chimiquement compatible avec le matériau du corps en matière transparente. Le film est lui-même déposé sur le corps en matière transparente lors du surmoulage. Le fil métallique aurait également pu être sur le corps en matière transparente par dépose 3D. La partie chauffante pourrait également être basée sur des encres conductrices, des nanomèches métalliques (cuivre, argent ou tout autre métal permettant une bonne conduction thermique et une transparence aux ondes), ou des nanotubes de carbone. Dans ce cas le design n'est pas en serpentin ; il s'agit d'un système chauffant conducteur alimenté par deux busbars de part et d'autre de cette zone chauffante. Le design de ces systèmes permet également d'être transparent à la fréquence du radar.

Dans l'invention une cavité d'air 20 est ménagée entre le réflecteur de lumière 400 et le corps transparent 200.

Le réflecteur 400 est assemblé sur le corps 200 en matière transparente, entre le corps 200 et le radar 2, par tout moyen approprié, par exemple par collage, soudure laser ou bouterollage. Cet assemblage est étanche à la lumière. Les sources de lumière 300 sont fixées sur le réflecteur 400.

Le réflecteur 400 présente une forme en U évasée. Cette forme est uniquement illustrative et non limitative. Dans un autre mode de réalisation, non représenté, le réflecteur peut avoir une forme courbe, formant une parabole dont la source de lumière 300 est située au foyer. Le réflecteur 400 est revêtu sur une face intérieure au dispositif de protection 1 d'indium déposé par la technique du dépôt en phase vapeur (PVD). Le réflecteur 400 est un insert amovible.

Les sources de lumière 300 contiennent des diodes électroluminescentes (LED) et sont situées en dehors du cône d'émission 600 du radar. Ainsi, elles ne perturbent pas le fonctionnement du radar. Il pourrait également être envisagé d'utiliser une source de lumière transparente aux ondes radar, par exemple des diodes électroluminescentes organiques (OLED).

La partie en serpentin (18s) de la piste chauffante (12) électriquement conductrice positionnée à la surface du corps 200 en matière transparente s'étend sur une surface d'intersection entre le corps 200 en matière transparente et le cône d'émission 600 du radar 2. La partie de connexion de la piste chauffante électriquement conductrice est située en dehors du cône d'émission 600 du radar 2.

Un revêtement de décor, non représenté, est peint sur la face du corps intérieure au dispositif de protection 1, sur la couche 220 du corps transparent 200. Le décor pourrait également être localisé à l'interface entre les deux couches 210 et 220. Il pourrait être gravé au laser. Il pourrait également être constitué par une texture de surface d'une des couches 210, 220.

Le corps 200 comporte deux zones opaques à la lumière, non représentées, derrière lesquelles les sources de lumières 300 et les parties de connexion (18c) de la piste chauffante (12) sont dissimulées.

L'invention n'est pas limitée aux modes de réalisation présentés et d'autres modes de réalisation apparaîtront clairement à l'homme du métier.

### Liste de références

1 : radôme,
2 : radar,
3 : zone de transmission,
4 : ondes du radar,
12 : piste chauffante,
18c : partie de connexion,
18s : partie chauffante,
20 : cavité d'air,
200 : corps formé d'une matière transparente aux ondes radar et à la lumière,
210 : couche du corps en matière transparente située vers l'extérieur du dispositif de protection,
220 : couche du corps en matière transparente située vers l'intérieur du dispositif de protection,
300 : source de lumière,
400 : réflecteur de lumière,
500 : faisceau lumineux,
600 : cône d'émission du radar,
700 : diode électroluminescente.

## Revendications

1. Dispositif (1) de protection d'un radar (2) de véhicule automobile, comprenant les éléments :
- un corps (200) formé d'une matière transparente aux ondes radar (4) et à la lumière,
- une source de lumière (300),
- un réflecteur de lumière (400) formé d'une matière transparente aux ondes radar (4), et
- une piste chauffante (12) électriquement conductrice positionnée à la surface ou à l'intérieur du corps (200) en matière transparente, les éléments étant disposés de manière qu'un faisceau lumineux (500) émis par la source de lumière (300) soit réfléchi par le réflecteur de lumière (400) vers le corps (200) en matière transparente, **caractérisé en ce qu'**une cavité d'air (20) est ménagée entre le réflecteur de lumière (400) et le corps transparent (200)..

2. Dispositif (1) de protection d'un radar (2) de véhicule automobile selon la revendication 1 qui comporte en outre un revêtement de décor, ou une texture de surface transparent(e) aux ondes radar.

3. Dispositif (1) de protection d'un radar (2) de véhicule automobile selon l'une quelconque des revendications précédentes, dans lequel le corps (200) en matière transparente comporte au moins deux couches (210, 220).

4. Dispositif (1) de protection d'un radar (2) de véhicule automobile selon l'une quelconque des revendications précédentes, dans lequel le réflecteur de lumière (400) est un insert amovible.

5. Dispositif (1) de protection d'un radar (2) de véhicule automobile selon l'une quelconque des revendications précédentes, dans lequel le réflecteur de lumière (400) est revêtu sur une face intérieure au dispositif de protection, de métaux tels que l'indium, l'or ou l'étain ou tout autre métal permettant un rendu « aspect chrome » et dont la faible épaisseur permet d'être transparent aux ondes du radar, de préférence déposés par la technique du dépôt en phase vapeur (« Physical Vapour Déposition », PVD).

6. Dispositif (1) de protection d'un radar (2) de véhicule automobile selon l'une quelconque des revendications précédentes, dans lequel la source de lumière (300) est située en dehors d'un cône d'émission (600) du radar (2).

7. Dispositif (1) de protection d'un radar (2) de véhicule automobile selon l'une quelconque des revendications précédentes, dans lequel la piste chauffante (12) comprend une partie de connexion (18c) qui est située en dehors du cône d'émission (600) du radar (2).

8. Dispositif (1) de protection d'un radar (2) de véhicule automobile selon l'une quelconque des revendications précédentes, dans lequel le corps (200) en matière transparente comprend une zone opaque à la lumière.

9. Dispositif (1) de protection d'un radar (2) de véhicule automobile selon l'une quelconque des revendications précédentes, dans lequel la piste chauffante (12) comprend une partie chauffante (18s) qui s'étend sur une surface d'intersection entre le corps (200) en matière transparente et le cône d'émission (600) du radar (2).

## Patentansprüche

1. Vorrichtung (1) zum Schutz eines Radars (2) eines Kraftfahrzeugs, aufweisend die Elemente:
- einen Körper (200), der aus einem für Radarwellen (4) und Licht durchlässigen Material gebildet ist,
- eine Lichtquelle (300),
- einen Lichtreflektor (400), der aus einem für Radarwellen (4) transparenten Material gebildet ist, und
- eine elektrisch leitende Heizbahn (12), die an der Oberfläche oder im Inneren des Körpers (200) aus transparentem Material positioniert ist, wobei die Elemente so angeordnet sind, dass ein von der Lichtquelle (300) emittierter Lichtstrahl (500) von dem Lichtreflektor (400) zu dem Körper (200) aus transparentem Material reflektiert wird, **dadurch gekennzeichnet, dass** ein Lufthohlraum (20) zwischen dem Lichtreflektor (400) und dem transparenten Körper (200) vorgesehen ist.

2. Vorrichtung (1) zum Schutz eines Radars (2) eines Kraftfahrzeugs nach Anspruch 1, die außerdem eine Dekorbeschichtung oder eine Oberflächenstruktur aufweist, die für Radarwellen durchlässig ist.

3. Vorrichtung (1) zum Schutz eines Radars (2) eines Kraftfahrzeugs nach einem der vorhergehenden Ansprüche, wobei der Körper (200) aus transparentem Material mindestens zwei Schichten (210, 220) aufweist.

4. Vorrichtung (1) zum Schutz eines Radars (2) eines Kraftfahrzeugs nach einem der vorhergehenden Ansprüche, wobei der Lichtreflektor (400) ein herausnehmbarer Einsatz ist.

5. Vorrichtung (1) zum Schutz eines Radars (2) eines Kraftfahrzeugs nach einem der vorhergehenden Ansprüche, bei der der Lichtreflektor (400) auf einer Innenseite der Schutzvorrichtung mit Metallen wie Indium, Gold oder Zinn oder jedem anderen Metall beschichtet ist, das ein "Chrom-Aussehen" ermöglicht und dessen geringe Dicke es erlaubt, für Radarwellen transparent zu sein, vorzugsweise durch die Technik der Dampfphasenabscheidung ("Physical Vapour Deposition", PVD) abgeschieden.

6. Vorrichtung (1) zum Schutz eines Radars (2) eines Kraftfahrzeugs nach einem der vorhergehenden Ansprüche, wobei die Lichtquelle (300) außerhalb eines Sendekegels (600) des Radars (2) angeordnet ist.

7. Vorrichtung (1) zum Schutz eines Radars (2) eines Kraftfahrzeugs nach einem der vorhergehenden Ansprüche, wobei die Heizbahn (12) einen Verbindungsabschnitt (18c) aufweist, der sich außerhalb des Sendekegels (600) des Radars (2) befindet.

8. Vorrichtung (1) zum Schutz eines Radars (2) eines Kraftfahrzeugs nach einem der vorhergehenden Ansprüche, wobei der Körper (200) aus transparentem Material einen lichtundurchlässigen Bereich aufweist.

9. Vorrichtung (1) zum Schutz eines Radars (2) eines Kraftfahrzeugs nach einem der vorhergehenden Ansprüche, wobei die Heizbahn (12) einen Heizabschnitt (18s) aufweist, der sich über eine Schnittfläche zwischen dem Körper (200) aus transparentem Material und dem Sendekegel (600) des Radars (2) erstreckt.

## Claims

1. Device (1) for the protection of a radar (2) of a motor vehicle, comprising the elements:
- a body (200) consisting of a material transparent to radar waves (4) and light,
- a light source (300),
- a light reflector (400) consisting of a material transparent to radar waves (4), and
- an electrically conductive heating track (12) positioned on the surface or inside the body (200) of transparent material,
the elements being arranged in such a way that a light beam (500) emitted by the light source (300) is reflected by the light reflector (400) towards the body (200) in transparent material, **characterized in that** an air cavity (20) is arranged between the light reflector (400) and the transparent body (200).

2. Device (1) for the protection of a radar (2) of a motor vehicle according to claim 1, which further comprises a decorative coating, or a surface texture transparent to radar waves.

3. Device (1) for the protection of a radar (2) of a motor vehicle according to any one of the preceding claims, wherein the body (200) of transparent material has at least two layers (210, 220).

4. Device (1) for the protection of a motor vehicle radar (2) according to any one of the preceding claims, wherein the light reflector (400) is a removable insert.

5. Device (1) for the protection of a motor vehicle radar (2) according to any one of the preceding claims, wherein the light reflector (400) is coated on an inner side of the protective device, with metals such as indium, gold or tin or any other metal allowing a "chrome aspect" rendering and whose thin thickness makes it possible to be transparent to radar waves, preferably deposited by the technique of vapor deposition ("Physical Vapour Deposition", PVD).

6. Device (1) for the protection of a radar (2) of a motor vehicle according to any one of the preceding claims, wherein the light source (300) is located outside an emission cone (600) of the radar (2).

7. Device (1) for the protection of a motor vehicle radar (2) according to any one of the preceding claims, wherein the heating track (12) comprises a connection part (18c) which is located outside the emission cone (600) of the radar (2).

8. Device (1) for the protection of a radar (2) of a motor vehicle according to any one of the preceding claims, in which the body (200) of transparent material comprises an area opaque to light.

9. Device (1) for the protection of a radar (2) of a motor vehicle according to any one of the preceding claims, wherein the heating track (12) comprises a heating part (18s) which extends over a surface of intersection between the body (200) in transparent material and the emission cone (600) of the radar (2).
